Europäisches Patentamt

European Patent Office

Office européen des brevets

(11) Publication number: **0 034 440**
**A2**

## EUROPEAN PATENT APPLICATION

(21) Application number: **81300458.7**

(22) Date of filing: **04.02.81**

(51) Int. Cl.³: **F 16 D 3/60**

(30) Priority: **14.02.80 GB 8005003**

(43) Date of publication of application:
**26.08.81 Bulletin 81 34**

(84) Designated Contracting States:
**BE DE FR GB IT NL SE**

(71) Applicant: **Flexibox Litimed
Nash Road Trafford Park
Manchester M17 1SS(GB)**

(72) Inventor: **Young, James John
16 Surridge High Legh
Lymm Cheshire(GB)**

(74) Representative: **Massey, Alexander
MARKS & CLERK Scottish Life House Bridge Street
Manchester, M3 3DP(GB)**

(54) Improvements in or relating to couplings.

(57) A coupling for transmitting drive between driving and driven members comprises a pair of flexible or flexing links pivotally connected together by a pin. One link (the driver link) is adapted for connection by a pin to the driving member and the other link (the driven link) is adapted for connection by a pin to the driven member. All three pins are supported in plain bearings or rolling element bearings or combinations thereof, which bearings accommodate at least the relative rotational movements between the driving and driven members. Such a coupling is capable of accepting angular, lateral and axial misalignments between the driving and driven members.

FIG. 1

EP 0 034 440 A2

2.

This invention relates to couplings for transmitting drive between driving and driven members.

The invention is particularly concerned with the known type of coupling in which the driving and driven members are interconnected by a linkage comprising a pair of pivotally interconnected links, one connected to the driving member and the other to the driven member, and the link arrangement being such that the linkage is deformed by relative rotation of the driving and driven members.

It is an object of the present invention to provide such a coupling which obviates or mitigates torsional oscillations, and is capable of accepting angular, lateral and axial misalignments.

According to the present invention there is provided a coupling for transmitting drive between driving and driven members, the coupling comprising a pair of flexible and/or flexing links pivotally connected together by a pin with one link (the driver link) being adapted for connection by a pin to the driving member and the other link (the driven link) being adapted for connection by a pin to the driven member, and all three pins being supported in plain bearings, or rolling element bearings or combinations of plain bearings and rolling element bearings, which bearings accommodate at least the relative rotational movements between the driving and driven members.

Embodiments of the present invention will now be described, by way of example, with reference to the

0034440

accompanying drawings, in which:-

Fig. 1 is a perspective view of a drive-transmitting arrangement incorporating a coupling according to the present invention;

Fig. 2 is a fragmentary sectional view of one embodiment of the connection between a driver link and the driving member;

Fig. 3 is a similar view of a driven link and its connection to the driven member;

Fig. 4 is a similar view of the connection between the driver and driven links;

Fig. 5 is a sectional view through an alternative connection between the driver and driven links;

Fig. 6 is a sectional view of the driver link at its connection with the driving member;

Fig. 7 is a view corresponding to Figs. 3 and 4 combined/ of yet another alternative connection between the driver and driven links; and

Fig. 8 is a sectional view of the alternative construction of driver link of Fig. 2 or 6.

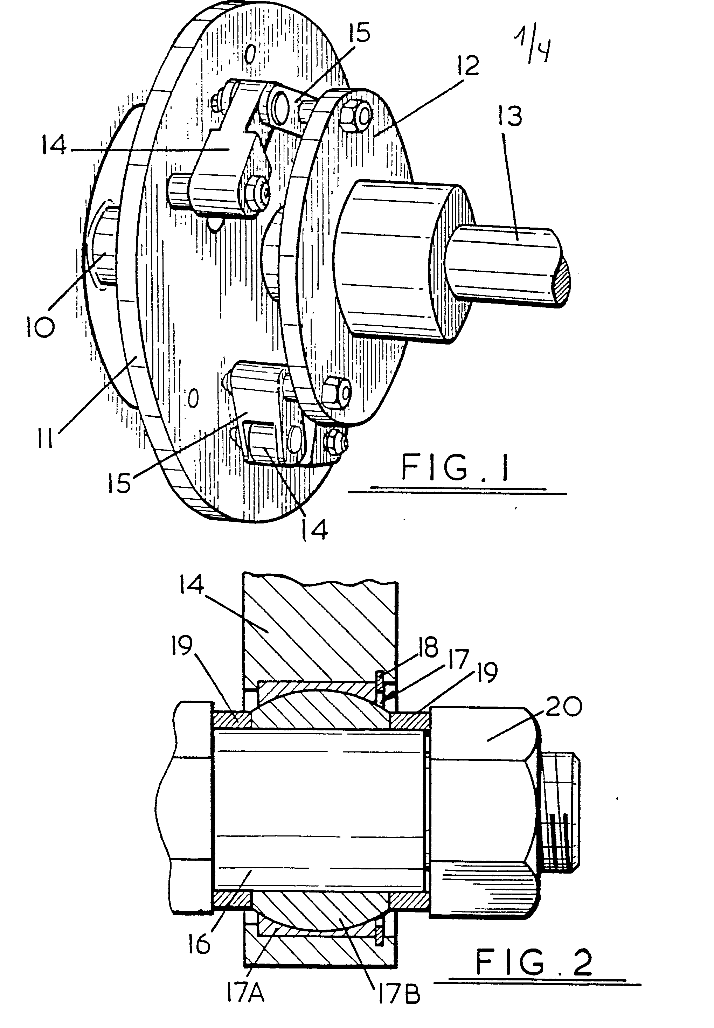

The drive-transmitting arrangement of Fig. 1 comprises a driving motor 10 having connected thereto a driving flange 11 which is coupled by pairs of links to a driven flange 12 fast with a driven shaft 13 of a machine.

Each pair of links comprises a driver link 14 and a driven link 15, the links being formed of solid bar and the driven link 15 being of forked construction.

Referring to Fig. 2, the driver link 14 is bolted to the driving member (not shown) by a pin or bolt 16, the

link 14 and the bolt 16 being interconnected by a plain spherical bearing 17 to permit not only rotation of the link 14 about the bolt 16 but also to cater for misalignments of the coupling. The housing 17A of the spherical bearing 17 is secured to the link 14 by a circlip 18 while the spherical inner part 17B is retained in position on the bolt 16 between two spacer sleeves 19 secured on the bolt 16 by a nut 20.

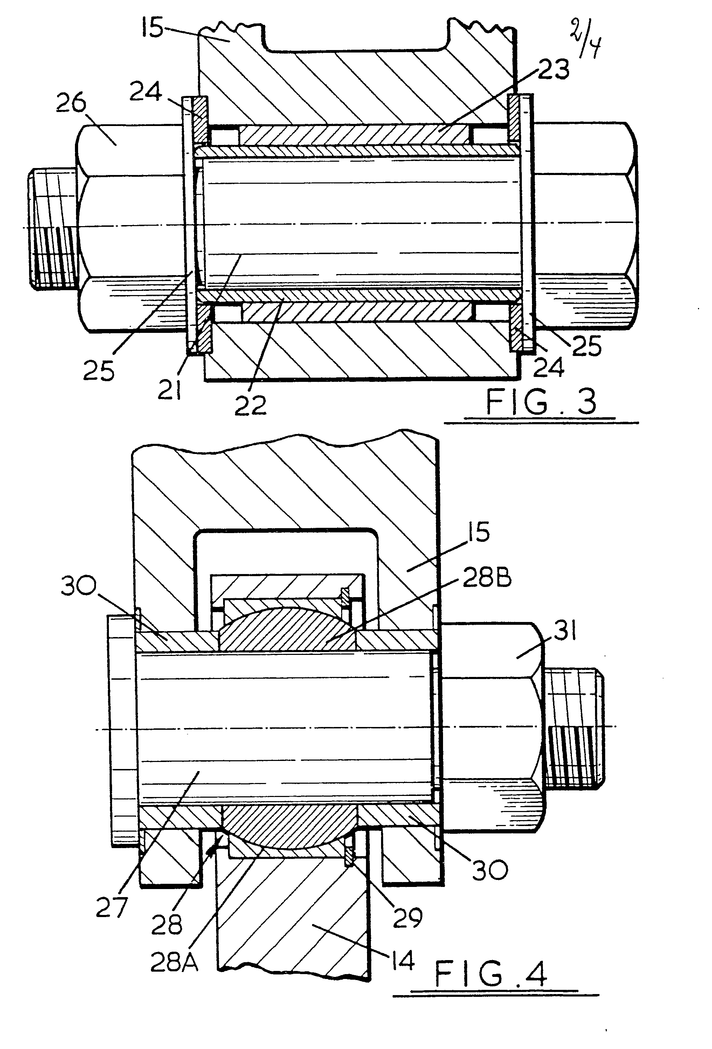

Referring to Fig. 3 now, it can be seen that the forked driven link 15 is bolted to the driven member (not shown) by a pin or bolt 21 on which is press-fitted a centreless ground sleeve 22. A plain bearing 23 is arranged between the link 15 and the sleeve 22 to permit rotation of the link 15 about the bolt 21. The link faces are clamped between thrust bearings 24 and washers 25 by a nut 26.

The pivotal connection between the driver and driven links 14 and 15 can be seen from Fig. 4 and this connection is by way of a pin or bolt 27 passing through the limbs of the link 15 and through the link 14 lying between said limbs. A plain spherical bearing 28 connects the link 14 to the bolt 27 to permit pivotal movement between the links 14 and 15 and to complement the plain spherical bearing 17 in catering for coupling misalignments. Here again, the outer part 28A of the spherical bearing 28 is secured to the link 14 by a circlip 29 while the inner part 28B is retained in position on the bolt 27 between two spacer sleeves 30 secured on the bolt 27 by a nut 31.

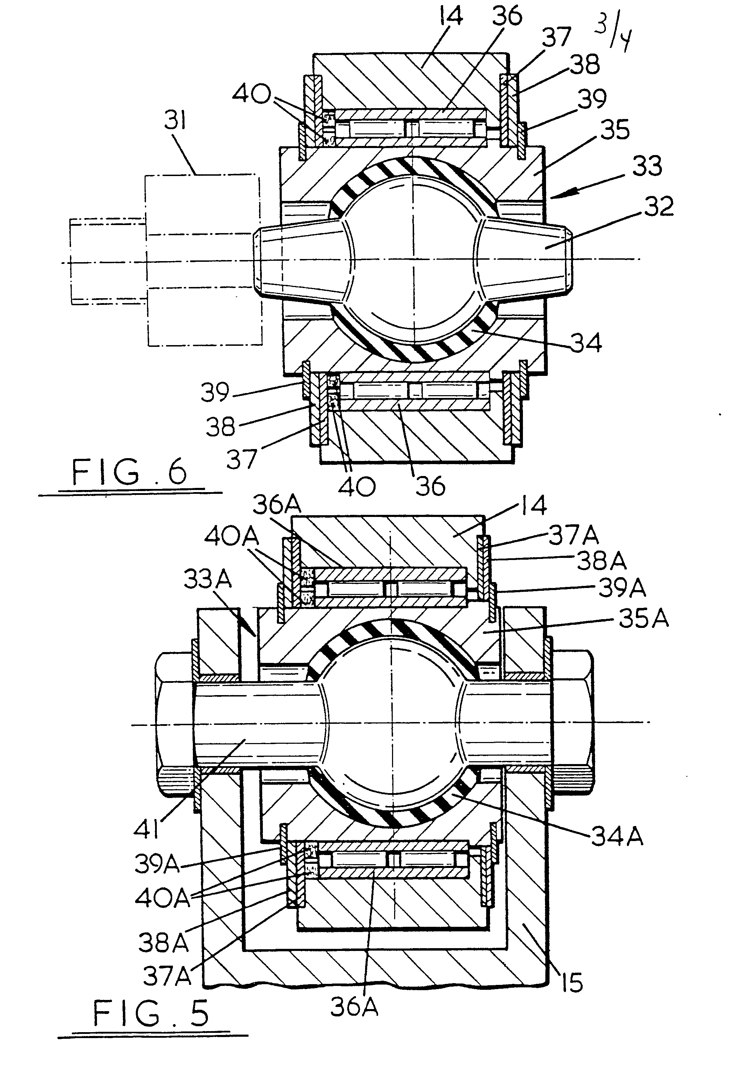

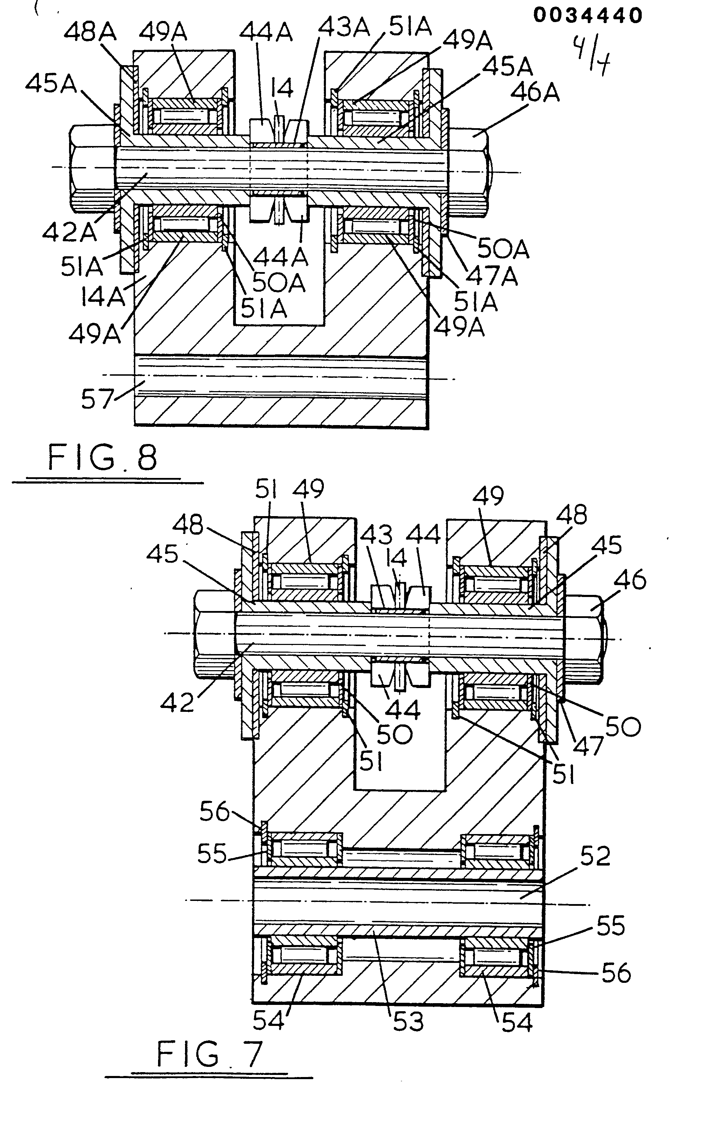

Referring now to Figs. 5 and 6, the driver link 14 is connected to the driving flange 11 through the intermediary of a spacer 31 by a pin or bolt 32 passing through a spherical bearing 33 which incorporates an internal elastomeric bush 34 for the bolt 32. The housing 35 of the spherical bearing 33 is connected to the driver link 14 via needle bearings 36, the driver link 14 and housing 35 being clamped together by thrust washers 37 and ground washers 38 retained in position by circlips 39 engaging in the housing 35. Soft packings 40 are arranged between one end of the needle bearings 36 and the adjacent thrust washer 37.

The needle bearings 36 permits rotation of the driver link 14 about its bolt 32 while the spherical bearing 33 caters for coupling misalignments.

Referring now to Fig. 5, the other end of the driver link 14 is connected between the limbs of the forked end of the driven link 15.

It can be seen that the two links 14 and 15 are connected together by a pin or bolt 41 traversing the fork limbs of the driven link 15 and a spherical bearing 33A connected to the driver link 14. The bearing arrangement at this end of the driver link 14 is identical with that at the driving flange end and need not, therefore, be described again. Like parts are indicated by the same reference numerals with the suffix "A".

The needle bearings 36A between the driver link 14 and the spherical bearing 33A of the driven link 14 permits relative pivotal movement between the links 14 and 15

0034440

while the spherical bearing 33A caters for coupling misalignments.

The connection between the driven link 15 and the driven flange 12 may be as described with reference to Fig. 3 of the drawings.

It will be manifest that the provision of the spacer 31 between the driving flange 11 and driver link 14 is necessary taking into consideration the combined width of the driver and driven links 14 and 15.

Plain spherical bearings disclosed in Figs. 2 and 4 may be substituted for the spherical bearings with elastomeric bushes of Figs. 5 and 6.

Plain bearings such as the plain bearing 23 of Fig. 3 may be substituted for the needle bearings of Figs. 5 and 6, and _vice_ _versa_.

The abovedescribed coupling has a very low or possibly even a zero stiffness to torque ratio and is capable of accepting axial, lateral or angular misalignments of the shafts carrying the driving and driven flanges of the drive-transmitting arrangement.

Reference is now made to Figs. 7 and 8/which the driver link 14 in this case is constituted by a pack of metal membranes, the forked driven link 15 being of bar stock. It is envisaged that the driven link 15 may also be constituted by a pack of metal membranes.

The two links 14 and 15 are interconnected by a pin or bolt 42, there being a sleeve 43 interposed between the driver link 14 and the bolt 42. Spacer washers 44 engage each side of membrane 14 and are urged thereagainst by clamping sleeves 45 held in position by a nut 46 on the bolt 42 which bears against the clamping sleeves 45 through the intermediary of a washer 47. Thrust washers 48 are interposed between the clamping sleeves 45 and the limbs of the forked driven link 15.

Needle bearings 49 are interposed between the clamping sleeves 45 and the limbs of the forked driven link 15 and these bearings 49 are secured in position by thrust washers 50 and circlips 51.

Adjacent the end of the driven link 15 remote from the bolt 42 is a hole 52 which accommodates a sleeve 53 for receiving the pin or bolt (not shown) for securing the driven link 15 to the driven flange 12.

The sleeve 53 is rotatably mounted in needle bearings 54 in the driven link 15, which bearings 54 are retained in position by thrust washers 55 and circlips 56.

The needle bearings 49 permit relative pivotal movement between the driver and driven links 14 and 15 and the needle bearings 54 permit relative pivotal movement between the driven link 15 and the driven flange 12.

Axial, lateral and angular misalignments between driving and driven flanges are catered for in this coupling by the driver link construction of a pack of metal membranes.

Referring to Fig. 8, the driver link 14 is connected, in this instance, to its driving flange through the intermediary of a forked connection link

0034440

14A of bar stock which has a hole 57 for receiving a bolt (not shown) to connect the driver and connection links 14, 14A to the driving flange 11.

The connection of the driver link 14 to the connection link 14A is identical to that between the driver link 14 and the driven link 15 and will not therefore be described further. Suffice it to say, like parts have the same reference numerals with the suffix "A".

The needle bearings 49A permit relative rotation between the driver link 14 and the connection link 14A. As aforesaid, the membrane pack construction of the driver link 14 caters for coupling misalignments.

Here again, it should be noted that the needle bearings 49, 49A and 54 may be replaced by plain bearings such as plain bearing 23 of Fig. 3.

Similarly, the plain bearing 23 may be replaced by a needle bearing such as needle bearing 49.

In referring to needle bearings herein, it should be clearly understood that such references encompass any rolling element bearing.

It should also be clearly understood that couplings according to the present invention may incorporate both plain bearings and rolling element bearings. Merely as an example and referring to Fig. 7, the needle bearings 54 could readily be replaced by plain bearings, such as plain bearing 23.

The plain bearings or rolling element bearings may be surrounded by resilient flexible bushes if desired or required.

9.

The plain bearings or rolling element bearings may be spherically mounted.

It is also envisaged that the spherical bearings can be replaced by rolling element bearings.

The pairs of links may be arranged offset, i.e. disposed at different radii from the axis of the drive transmitting arrangement, to permit more links to be used to increase the torque for a given speed condition.

CLAIMS:

1. A coupling for transmitting drive between driving and driven members, the coupling comprising a pair of flexible and/or flexing links pivotally connected together by a pin with one link (the driver link) being adapted for connection by a pin to the driving member and the other link (the driven link) being adapted for connection by a pin to the driven member, and all three pins being supported in plain bearings or rolling element bearings, or combinations of plain bearings and rolling element bearings which bearings accommodate at least the relative rotational movements between the driving and driven members.

2. A coupling as claimed in claim 1 in which at least one of the bearings is spherically mounted to cater for axial, angular or lateral misalignments between the driving and driven members.

3. A coupling as claimed in claim 2 in which the or each spherical bearing is a plain spherical bearing.

4. A coupling as claimed in claim 2, in which the or each spherical bearing incorporates a flexible resilient bush surrounding the pin encompassed by the bearing.

5. A coupling as claimed in claim 1 in which the driver link at least is constituted by a pack of metal membranes to cater for axial, angular or lateral misalignments between the driving or driven members.

6. A coupling as claimed in claim 5, in which one or more of the bearings is surrounded by a resilient flexible bush.

7. A coupling as claimed in claim 3, in which the driver link is connected to the driving member and to the driven link by pins each accommodated in a plain spherical bearing, while the driven link is connected to the driven member by a plain cylindrical bearing.

8. A coupling as claimed in claim 4 in which the driver link incorporates rolling element bearings encompassing a spherical bearing having a flexible resilient bush surrounding the pin connecting the driver link to the driven link.

9. A coupling as claimed in claim 8 in which the pin connecting the driver link to the driving member is accommodated in a resilient flexible bush of a spherical bearing rotatably mounted in rolling element bearings in the driver link.

10. A coupling as claimed in claim 5, in which the pin connecting the driver link to the driven link is accommodated in rolling element bearings.

11. A coupling as claimed in claim 10 in which the driver link is connected to a connection link by a pin accommodated in rolling element bearings, the connection link being bolted to the driving member.

12. A coupling for transmitting drive between driving and driven members, substantially as hereinbefore described with reference to Figs. 1 to 4 or Figs. 5 and 6 or Figs. 7 and 9 of the accompanying drawings.

0034440

1/4

**FIG. 1**

**FIG. 2**

0034440

2/4

FIG . 3

FIG .4

0034440

3/4

FIG. 6

FIG. 5

FIG. 8

FIG. 7